# EUROPEAN PATENT APPLICATION

(11) **EP 1 892 627 A1**
(43) Date of publication of application: **27.02.2008**
(21) Application number: 07114236.8
(22) Date of filing: 13.08.2007
(51) Int. Cl.: G06F 9/48

(54) **Multitask managing apparatus and method in mobile communication system**

(30) Priority: 23.08.2006 KR 20060079750
(71) Applicant: Samsung Electronics Co., Ltd., Suwon-si, Gyeonggi-Do (KR)
(72) Inventor: Lee, Yoon-Gi, Gyeonggi-do (KR)
(74) Representative: Grünecker, Kinkeldey, Stockmair & Schwanhäusser Anwaltssozietät

(57) **Abstract**

A mobile communication system is provided. A multitask managing method in the mobile communication system, which includes determining if a specific key is input to switch a specific task of currently running tasks to a main task; when the specific key is input, displaying the currently running tasks together with a preset keys associated with each currently running task; selecting the specific task from the displayed tasks by inputting a preset key associated with the specific task; and switching the selected task to the main task.

## Description

The present invention relates generally to a mobile communication system, and in particular, to an apparatus and method for switching between tasks of a plurality of tasks using a small number of key manipulations for multitask management in a mobile communication terminal.

Since mobile communication terminals were originally designed and developed based on voice telephony, multitask management was not initially. However, with technical advances, data communication and multimedia reproduction functions are additionally provided by the mobile communication terminals as well as the voice telephony. Simultaneously, a multitask processing function for executing several tasks at the same time is available and accordingly, the multitask managing function comes into use.

Particularly, after the advent of new mobile communication terminals that support functions of a Personal Digital Assistant (PDA), which support multitask processing like smart phone and the existing voice telephony function, the demand for the multitask management is increasing. The multitask management was originally developed and used for personal computers and UNIX based computers.

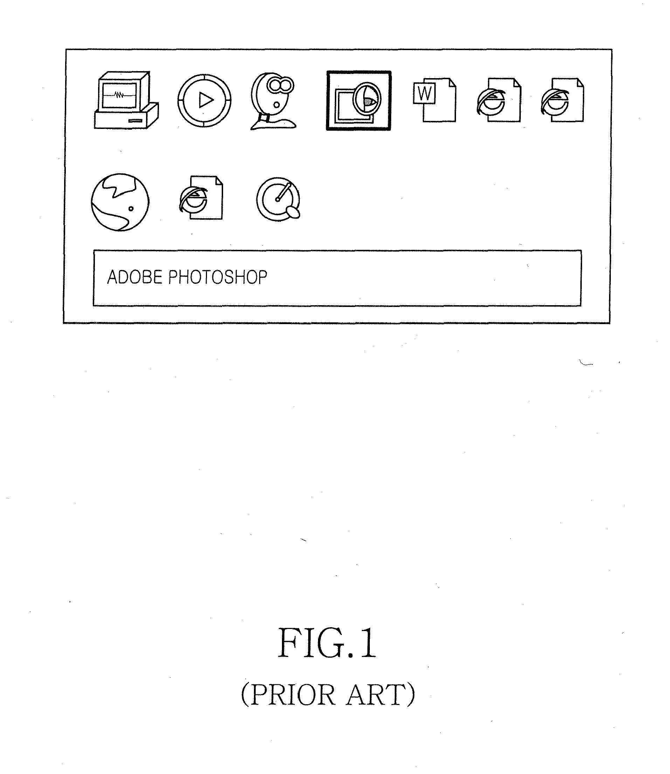

FIG. 1 is a diagram illustrating a view of a conventional multitask management in a personal computer, where a plurality of running tasks are displayed and the one task is selected from the plurality of tasks is presented in a frame. A specific task can be selected and switched to as a main task by pressing a preset key or manipulating a mouse.

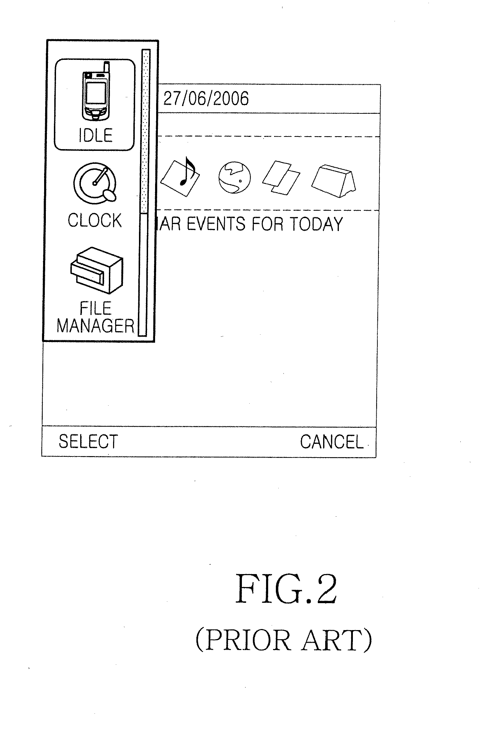

FIG. 2 is a diagram illustrating a view of another conventional multitask management in a smart phone, where a plurality of running tasks are displayed and the one task that is selected from the plurality of tasks is presented in a frame. A specific task can be selected and switched to as a main task by pressing a preset key several times.

A preset key needs to be pressed several times to select a specific task from the running tasks, as shown in FIG. 2, even in the most advanced multitask supporting mobile communication terminals.

Disadvantageously, such operations are not easy for the user to use, and requires a long time to manipulate the mobile communication terminal.

The present invention has been designed to substantially solve at least the above problems and/or disadvantages and to provide at least the advantages below. Accordingly, the object of the present invention is to provide a multitask managing apparatus and method in a mobile communication system.

This object is solved by the subject matter of the independent claims.

Preferred embodiments are defined in the dependent claims.

Another aspect of the present invention is to provide an apparatus and method for enabling a user to more rapidly and easily switch to his/her intended program when multiple programs are running in a mobile communication system.

A further aspect of the present invention is to provide a user interface for enabling a user to more rapidly and easily switch to his/her intended program when multiple programs are running in a mobile communication system.

The above aspects are achieved by providing a multitask managing method in a mobile communication system, which includes determining if a specific key is input to switch a specific task of currently running tasks to a main task; when the specific key is input, displaying the currently running tasks together with preset keys associated with the currently running tasks; selecting the specific task from the displayed tasks by inputting a preset key associated with the specific task; and switching the selected task to the main task.

According to another aspect of the present invention, a multitask managing method in a mobile communication system, includes determining if a request is received from a specific program to switch a specific task of currently running tasks to a main task; when the request is received, providing a list of the currently running tasks to the specific program; receiving a task selected to switch to the main task from the specific program; and switching the selected task to the main task.

According to yet another aspect of the present invention, a multitask managing apparatus in a mobile communication system, includes a controller for determining if a specific key is input to switch a specific task of currently running tasks to a main task, and controlling to switch the specific task to the main task; and a multitask processor for displaying the currently running tasks together with preset keys associated with the currently running tasks, selecting the specific task from the displayed tasks by inputting a preset key associated with the specific task, and switching the selected task to the main task.

According to a further aspect of the present invention, a multitask managing apparatus in a mobile communication system, includes a controller for determining if a request is received from a specific program to switch a specific task of currently running tasks to a main task, and controlling to switch the specific task to the main task; and a multitask processor for providing a list of the currently running tasks to the specific program, receiving a task selected to switch to the main task from the specific program, and switching the selected task to the main task.

The present invention will become more apparent from the following detailed description when taken in conjunction with the accompanying drawings in which:
FIG. 1 depicts a conventional multitask management system;
FIG. 2 depicts another conventional multitask management system;
FIG. 3 is a block diagram of a mobile communication terminal for multitask management according to the present invention;
FIG. 4 is a flowchart of a multitask managing method according to the present invention; and
FIG. 5 depicts the multitask management system according to the present invention.

Preferred embodiments of the present invention will be described herein below with reference to the accompanying drawings. In the following description, well-known functions or constructions are not described in detail since they would obscure the invention in unnecessary detail.

The present invention provides a multitask managing apparatus and method in a mobile communication system.

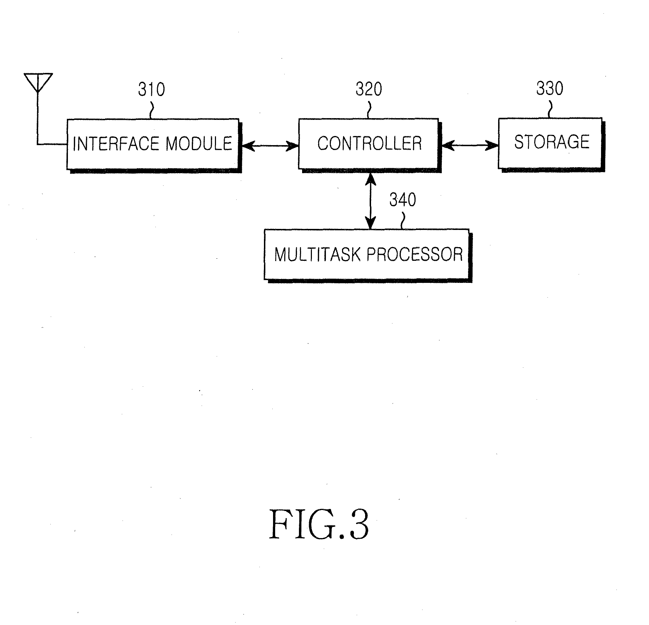

FIG. 3 is a block diagram of a mobile communication terminal for multitask management according to the present invention. Herein, a task indicates a program.

When receiving a request to switch a specific task, from currently running tasks to a main task, a controller 320 of FIG. 3 provides the request to a multitask processor 340 and controls the multitask processor 340 to receive the task to be switched to the main task and to switch the selected task to the main task. The controller 320 can receive the request through a preset key or a call of another program.

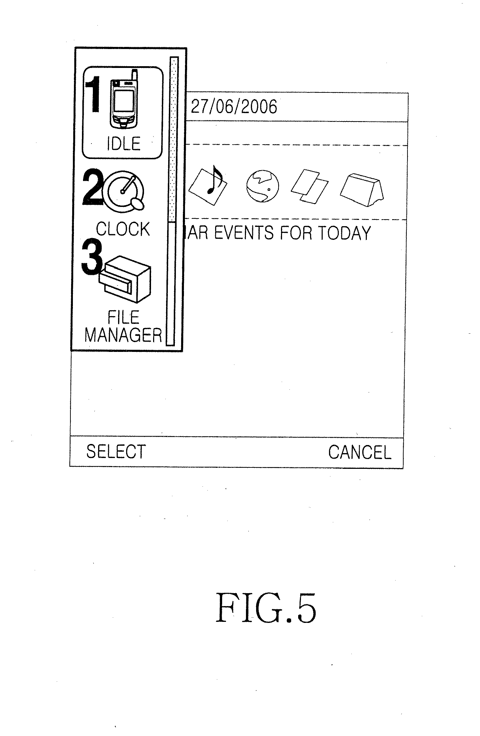

According to the direction and the information from the controller 320, the multitask processor 340 displays the currently running tasks, that is, the currently processing tasks, receives the task to be switched to the main task, and switches the corresponding task to the main task. While displaying the processing tasks on a display, specific keys associating with the respective tasks are displayed on the display together with the current processing tasks as shown in FIG. 5. For instance, when the specific keys are numbers 1, 2, and 3, the inputting of the 1 key from a keypad switches a task corresponding to the 1 key to the main task. The keypad and the display unit are not shown in the drawing.

That is, an index value for the 1 key is the task associated with the 1 key. The specific keys used can be any of the keys (excluding keys such as power key and end key, that can not be mapped) including the number keys and character keys such as a, b, and c, etc. In other words, the multitask processor 340 switches the task by receiving the index related to the task to be switched to the main task through the input of the specific preset key from the user.

Alternatively, the multitask processor 340 can switch the task by receiving from the specific program an index related to the task to be switched. For example, assume that an alarm program is operating as background and scheduled to drive an MP3 play program at six o'clock. When the MP3 program is operated in the background, the alarm program can request the multitask processor 340 to switch the MP3 driver program to the main task and then the MP3 driver program can produce the alarm effect by reproducing an MP3 file.

A storage 330 contains programs for controlling the overall operation of the apparatus and temporary data generated from the program execution.

An interface module 310, which serves to communicate with other nodes, includes a Radio Frequency (RF) processor and a baseband processor. The RF processor converts a signal received on an antenna to a baseband signal and provides the converted baseband signal to the baseband processor. The RF processor converts a baseband signal from the baseband processor to an RF frequency transmittable over the air and transmits the converted signal on the antenna.

As constructed above, the controller 320 can function as the multitask processor 340. The controller 320 and the multitask processor 340 are separately illustrated to explain their functions. The controller 320 may process all or part of the functions of the multitask processor 340.

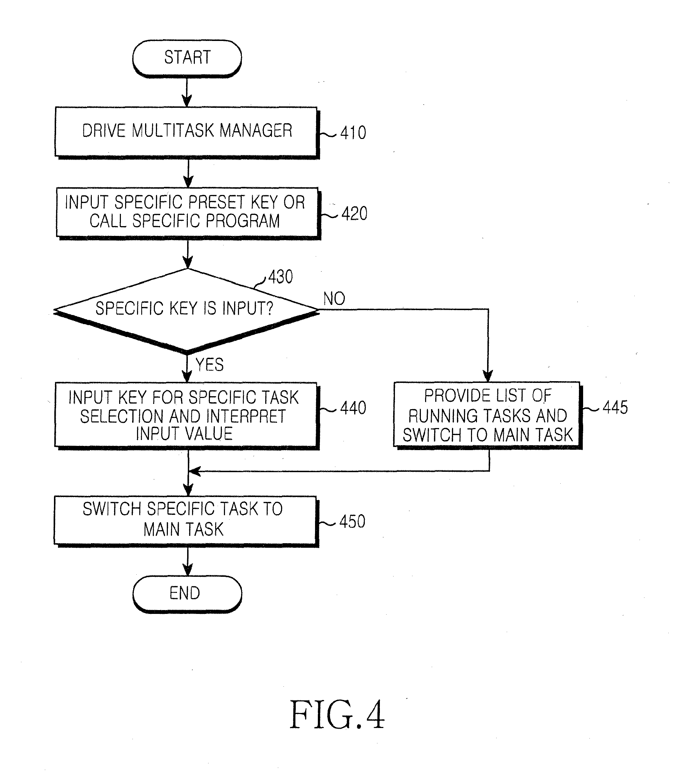

FIG. 4 is a flowchart of a multitask managing method according to the present invention.

In FIG. 4, when the controller 320 of the mobile communication terminal is powered on, the controller 320 drives a multitask processor 340 in step 410.

When the user inputs a specific key predefined for the multitask management or when a specific program is called up in step 420, the controller 320 informs the multitask controller 340 of this event.

When the specific key is input in step 430, the multitask processor 340 displays the currently running tasks, that is, the currently processed tasks, in step 440. The currently processed tasks are displayed on the display together with specific keys indicating the respective tasks as shown in FIG. 5. Next, the multitask processor 340 receives one of the specific keys input from the user on the keypad and interprets an input value related to the specific key predefined to select the specific task. In detail, the multitask processor 340 receives from the user a preset key of the specific task to switch and interprets which task the preset index indicates.

In step 450, the task relating to the index is switched to the main task.

When the specific program is called up in step 430, the multitask processor 340 provides a list of the currently running task and receives an index value of the task to be switched to the main task from the specific program in step 445.

In step 450, the task relating to the index is switched to the main task.

Next, the algorithm of the present invention is ended.

Alternate embodiments of the present invention can also comprise computer readable codes on a computer readable medium. The computer readable medium includes any data storage device that can store data that can be read by a computer system. Examples of a computer readable medium include magnetic storage media (such as ROM, floppy disks, and hard disks, among others), optical recording media (such as CD-ROMs or DVDs), and storage mechanisms such as carrier waves (such as transmission through the Internet). The computer readable medium can also be distributed over network coupled computer systems so that the computer readable code is stored and executed in a distributed fashion. Also, functional programs, codes, and code segments for accomplishing the present invention can be construed by programmers of ordinary skill in the art to which the present invention pertains.

According to the present invention, when a plurality of programs are running in the mobile communication terminal, it is possible to rapidly switch to a specific program through a small number of key manipulations.

While the invention has been shown and described with reference to certain preferred embodiments thereof, it will be understood by those skilled in the art that various changes in form and details may be made therein without departing from the scope of the invention as defined by the appended claims.

## Claims

1. A multitask managing method in a mobile communication system, comprising the steps of:
determining if an event occurs to switch a task of currently running tasks to a main task;
when the event occurs, displaying the currently running tasks with at least one character associated with each currently running task;
selecting the task from the currently running tasks by inputting at least one character associated with the task; and
switching the selected task to the main task.

2. The multitask managing method of claim 1, wherein the characters comprise alphanumeric characters and symbols.

3. A multitask managing method in a mobile communication system, comprising the steps of:
determining if a program requests to switch a task of currently running tasks to a main task;
providing to the program a list of the currently running tasks when the program requests to switch a task of currently running tasks to a main task;
receiving from the program a selected task to switch to the main task; and
switching the selected task to the main task.

4. A multitask managing apparatus in a mobile communication system, comprising:
a controller for determining if an event occurs to switch a task of currently running tasks to a main task, and controlling the switch of the task to the main task; and
a multitask processor for displaying the currently running tasks with at least one character associated with each currently running task, selecting the task from the currently running tasks by inputting at least one character associated with the task, and switching the selected task to the main task.

5. The multitask managing apparatus of claim 4, wherein the characters comprise alphanumeric characters and symbols.

6. A multitask managing apparatus in a mobile communication system, comprising:
a controller for determining if a program requests to switch a task of currently running tasks to a main task, and controlling the switch of the task to the main task; and
a multitask processor for providing to the program a list of the currently running tasks, receiving from the program a selected task to switch to the main task, and switching the selected task to the main task.

7. A method performed in a mobile communication terminal for multitask management in a mobile communication system, the method comprising the steps of:
determining if an event occurs to switch a task of currently running tasks to a main task;
when the event occurs, displaying the currently running tasks with at least one character associated with each currently running task;
selecting the task from the currently running tasks by inputting at least one character associated with the task; and
switching the selected task to the main task.

8. The method of claim 7, wherein the characters comprise alphanumeric characters and symbols.

9. A method performed in a mobile communication terminal for multitask management in a mobile communication system, the method comprising the steps of :
determining if a program requests to switch a task of currently running tasks to a main task;
providing to the program a list of the currently running tasks when the program requests to switch a task of currently running tasks to a main task;
receiving from the program a selected task to switch to the main task; and
switching the selected task to the main task.

10. A multitask managing mobile communication terminal in a mobile communication system, comprising:
a controller for determining if an event occurs to switch a task of currently running tasks to a main task, and controlling the switch of the task to the main task; and
a multitask processor for displaying the currently running tasks with at least one character associated with each currently running task, selecting the task from the currently running tasks by inputting at least one character associated with the task, and switching the selected task to the main task.

11. The multitask managing mobile communication terminal of claim 10, wherein the characters comprise alphanumeric characters and symbols.

12. A multitask managing mobile communication terminal in a mobile communication system, comprising:
a controller for determining if a program requests to switch a task of currently running tasks to a main task, and controlling the switch of the task to the main task; and
a multitask processor for providing to the program a list of the currently running tasks, receiving from the program a selected task to switch to the main task, and switching the selected task to the main task.

13. A multitask managing mobile communication terminal in a mobile communication system, comprising:
a interface module for communicating with other nodes;
a controller for determining if an event occurs to switch a task of currently running tasks to a main task, displaying the currently running tasks with at least one character associated with each currently running task, selecting the task from the currently running tasks by inputting at least one character associated with the task, and switching the selected task to the main task; and
a storage for containing programs for controlling the overall operation of the mobile terminal and temporary data generated from the program execution.

14. The multitask managing mobile communication terminal of claim 13, wherein the characters comprise alphanumeric characters and symbols.

15. A multitask managing mobile communication terminal in a mobile communication system, comprising:
a interface module for communicating with other node;
a controller for determining if a program requests to switch a task of currently running tasks to a main task, controlling the switch of the task to the main task, providing to the program a list of the currently running tasks, receiving from the program a selected task to switch to the main task, and switching the selected task to the main task; and
a storage for containing programs for controlling the overall operation of the mobile terminal and temporary data generated from the program execution.

16. A computer-readable recording medium having recorded thereon a program for a multitask managing in a mobile communication system, comprising;
a first code segment, for determining if an event occurs to switch a task of currently running tasks to a main task;
a second code segment, when the event occurs, displaying the currently running tasks with at least one character associated with each currently running task;
a third code segment, for selecting the task from the currently running tasks by inputting at least one character associated with the task; and
a fourth code segment, for switching the selected task to the main task.

17. The computer-readable recording medium of claim 16, wherein the characters comprise alphanumeric characters and symbols.

18. A computer-readable recording medium having recorded thereon a program for a multitask managing in a mobile communication system, comprising;
a first code segment, for determining if a program requests to switch a task of currently running tasks to a main task;
a second code segment, providing to the program a list of the currently running tasks when the program requests to switch a task of currently running tasks to a main task;
a third code segment, for receiving from the program a selected task to switch to the main task; and
a fourth code segment, for switching the selected task to the main task.
